# EUROPEAN PATENT SPECIFICATION

(11) **EP 0 633 866 B1**
(45) Date of publication and mention of the grant of the patent: **03.09.1997**
(21) Application number: 92924968.8
(22) Date of filing: 24.11.1992
(51) Int. Cl.: C02F 9/00

(54) **METHOD AND APPARATUS FOR BATCHWISE BIOLOGICAL AND CHEMICAL PURIFICATION OF SOIL WATER**
METHODE UND EINRICHTUNG ZUR ABSATZWEISE BIOLOGISCHEN UND CHEMISCHEN REINIGUNG VON GRUNDWASSER
PROCEDE ET APPAREIL POUR LA PURIFICATION BIOLOGIQUE ET CHIMIQUE PAR LOTS DE L'EAU DU SOL

(30) Priority: 28.11.1991 SE 9103534
(43) Date of publication of application: 18.01.1995
(73) Proprietor: LARSSON, Erik, N-791 32 Falun (SE)
(72) Inventor: LARSSON, Erik, N-791 32 Falun (SE)
(74) Representative: Avellan-Hultman, Olle
(86) International application number: SE9200797
(87) International publication number: WO9311076

(56) References cited:
- US-A- 4 596 658

## Description

The present invention relates to a method and an apparatus for intermittently treating soil water and/or waste water by means of a biological purification and, upon need, also by a chemical purification. The apparatus for this purpose comprises a conventional sludge separator, or alternatively a balancing tank, and a reaction apparatus, called reactor.

An apparatus for purification of soil water is known from US-A-4,596,658. Said apparatus operates by a well known decanting technics, whereby the water in the batch reactor is being decanted solely following the water level in the reactor tank and without using any pressure means for draining the purified water.

The purification process according to the invention is built on a modern technique which in the litterature is referred to as SBR technolgy, which expression stands for Sequencing Batch Reactor Technology.

In short the SBR technology functions so that a reaction apparatus containing active sludge receives a batch of soil water or waste water for treatment thereof according to a predetermined cycle, whereupon the cycle is repeated for a new batch of soil water. According to known art the operation cycle generally is as follows:
- filling up the apparatus with soil water
- treating the soil water with air (aeration)
- sedimentation
- draining of clear water, and
- draining of excess sludge (not always in every cycle).

According to the present invention the SBR technology has been modified in that the sludge separator or any other balancing or levelling tank be made cooperating with the reactor, whereby it should be able to put said reactor under a certain over pressure. To this end a blowing apparatus is used, for instance some type of compressor or a side channel fan. Said blowing apparatus is used
- both for treating the active sludge in the reactor tank with air (aeration),
- for creating an over pressure in the reactor tank, which over pressure is used for draining clear (purified) water from the tank and also for draining active sludge, for instance recycling said sludge to the sludge separator,
- for closing a hose valve between the sludge separator and the reactor,
- and finally also for admixing dosed amounts of flocculation and/or precipitation chemicals.

The said blowing apparatus consequently is the main source of energy for the entire system and this is the basis for the simple and safe operation of the entire process, and is thereby the reason why the process is suitable for small plants which are only rarely supervised.

The way in which the over pressure in the reactor is established and used is the very basis of the invention. According to the present method one or more standpipes are mounted in the reactor tank for draining of clear (purified) water. The bottom opening of said tube or tubes is/are provided on a level which is a low level for the clear water after sedimentation of the sludge water, and the top opening of said tubes is formed with an outlet from the reactor, for instance an overflow outlet. The high level of the clear water outlet is advantageous in that the clear water can be drained to the final discharge place without the need of being pumped.

The momentary raising of the water column in the standpipe above the liquid level in the reactor tank corresponds to the necessary pressure in the reactor tank for pressing out clear water. When the connection between the reactor and the sludge separator or any other vessel is thereafter opened there is a remaining differential pressure which is sufficient for forcing a quantity of excess sludge back to the sludge separator or to any other suitable storing space.

As compared with the technics of said US-A-4.596,658 the present invention offers a low cost and maintenace free decanting equipment, in which always an exact amount of excess sludge can be expelled, a closed system having good hygienic conditions, in which the air leaves through one single outlet whereby such air can easily be directed to a odour reducing filter, the entire apparatus can be made by concrete, even large apparatus, the roof of which can be used as parking places, floor for a factory, etc.

The above and other aspects of the invention will be described in the following with reference to a number of accompanying drawings, in which:

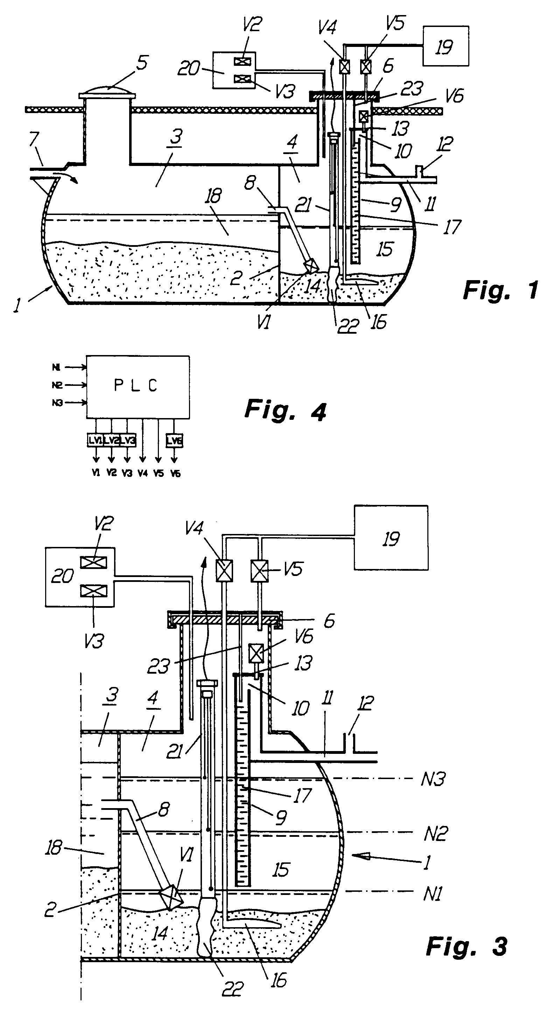

Figure 1 diagrammatically shows a vertical cross section through a plant formed in accordance with the invention,
figures 2a-2f show, in cross section views, an operation sequence consisting of six different stages of a process cycle in a plant according to the invention comprising a sludge separator and a reactor tank,
figure 3 shows the design more in detail of the reactor tank comprised in the above mentioned plant,
figure 4 diagrammatically shows a control unit for the plant,
figure 5 shows a dosing apparatus for the chemicals unsed in a plant according to the invention,
figure 6 is an enlarged view of a detail in the dosing apparatus of figure 5,
figure 7 shows an alternative design of the plant according to figures 1 and 2, and
figure 8 shows an alternative design of a detail of the apparatus of figure 3.

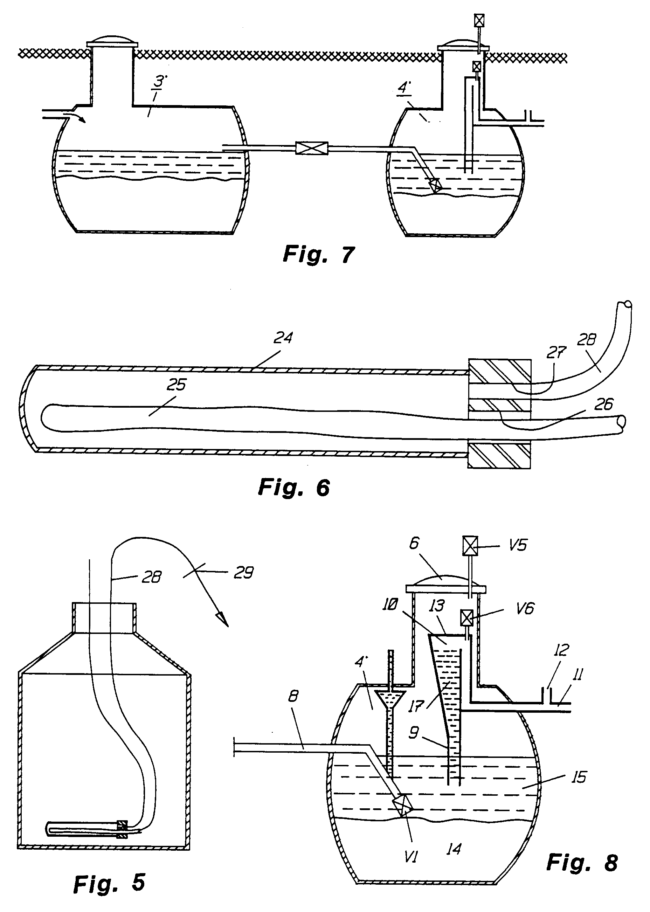

In a simple but preferred embodiment of the the invention a purification plant comprises one single tank 1 which by a partition wall 2 is divided into two parts, a larger part which in this case is called a sludge separator 3 and a smaller part 4 which is the actual reactor 4. In particular for large plants, as shown in figure 7, it may be preferred to make use of two separate tanks placed aside of each other. For still larger or other types of plants it may be suitable to utilize an earlier in the process used sludge separator with a decanting means opening in the present plant, which later tank thereby will act as a balancing or levelling tank. Such large plants can be formed with several reactors 4 connected to one and the same balancing tank. In the following the designation "sludge separator" stands for a sludge-separator-tank/balancing-tank.

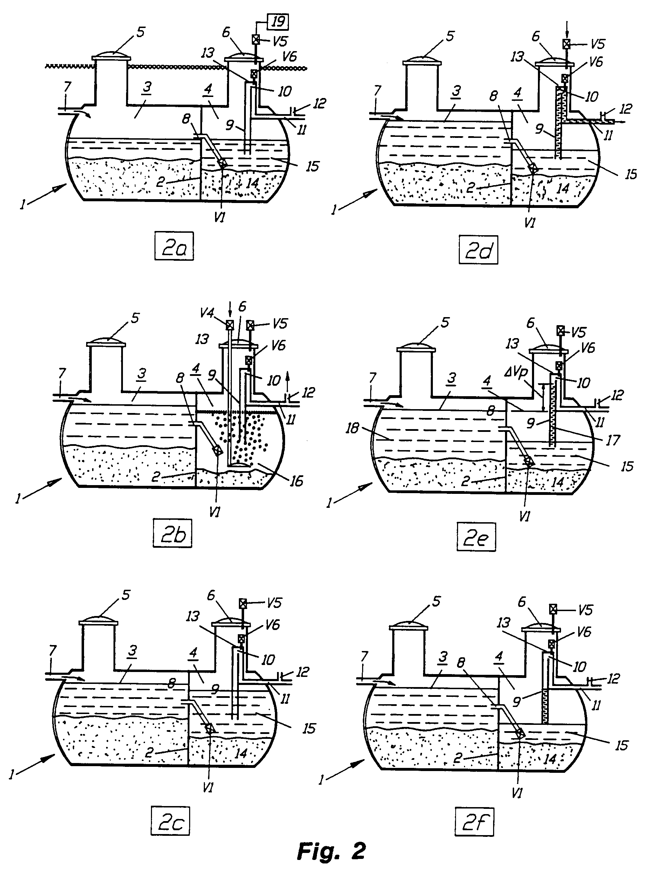

Figures 2a-2f diagrammatically and in cross section views show a preferred embodiment of a purification plant operating in predetermined stages of a purification process. In the illustrated simple embodiment the sludge separator 3 and the reactor 4 are included in a common tank 1 and are separated from each other by the partition wall 2. The sludge separator preferably is formed with a lid 5 for making it possible to exhaust sludge and to perform maintenance service of the separator. The reactor must have a tight lid which makes it possible to create an over pressure in the reactor, and which makes it possible to perform maintenance service of the reactor. The sludge separator 3 has an intake 7 for soil water from several domestic places and an outlet 8 in the form of a hose or a tube leading in to the reactor part 4. The outlet level of the sludge separator 3 corresponds to a preferred volume in the tank. There preferably also ought to exist a higher located outlet in the form of an overflow outlet (not shown in the drawings) which can lead the soil water passed the reactor in case of very high soil water flows or in case the reactor should be out or order. The outlet 8 of the reactor 4 is placed on a level which corresponds to a volume of active sludge which always should remain in the reactor 4 as a guarantee for safe purification. The outlet if formed with a valve V1 which is to be described in the following.

In the reactor part 4 there is a standpipe 9 which has an important function for the invention. As indicated by the expresstion said stand pipe 9 is mainly vertical and is with its open bottom end positioned on a level where clear (purified) water will exist after the sedimentation stage. The upper end of the tube 9 can be formed as an overflow outlet 10 leading to an outlet 11 from the plant of clear water. If necessary said outlet 11 can be formed with a venting tube 12. In the embodiment of the invention there must be a sealing above the standpipe 9 and the overflow outlet 10, through which preferably may extend an air outlet 13 operated by a valve V6. Alternatively it is, of course, possible to provide an air outlet to the ambient air through the wall of the reactor. In such case the venting tube 12 at the outlet for clear water may be excluded.

In a further preferred embodiment, which is not illustrated, the standpipe 9 may open in the abient air. In such case there is no need for the sealed outlet 13.

A treatment of a batch of soil (or waste) water according to the so called SBR technology (Sequencing Batch Reactor Technology) using the present invention can be made as follows and as illustrated in six stages in figures 2a-2f:
Stage 1: In figure 2a is illustrated how the reactor containing active sludge 14 is filled up with soil water 15 from the sludge separator 3.The valve V1 is open for letting soil water into the reactor, and the valve V6 is open for letting air out during the filling of soil water into the reactor 4.
Stage 2: In the succeeding stage figure 2b shows an introduction of air into the reactor 4 which is preferably made by means of a known type of rubber membrane aeration apparatus 16. The supply of air will be described more closely in the following. The valve V6 is still open for letting air out of the reactor 4. The valve V1 may now be closed, or it may be closed as late as for instance about fifteen minutes before the aeration is being stopped. In the latter case, which is shown in figure 2b, the reactor can receive more soil water during a process cycle. Generally a deposition and a flocculation substance is added to the reactor, preferably at the same time as the valve V1 is being closed.
Stage 3: Figure 2c shows the succeeding phase of the cycle, which phase is the sedimentation. Under calm conditions active sludge 14 is deposited at the bottom of the reactor 4.
Stage 4: Figure 2d shows how compressed air is introduced through the valve V5 for providing a discharge of ready treated water. The valve V6 is closed and an over pressure is built up in the reactor 4. The clear water rises in the standpipe 9 depending on the over pressure in the reaction chamber and leaves through the outlet 11.
Stage 5: Figure 2e shows the situation when the valve V1 in the next phase has just been opened. A differential pressure ΔVp is present in the reactor tank and this is evident from the figure in that the water column 17 in the standpipe 9 is higher than the water level 18 in the sludge separator 3. This differential pressure ΔVp is now utilized for pumping excess sludge back from the reactor 4 to the sludge separator 3.
Stage 6: Figure 2f shows the situation when the differential pressure ΔVp is zero and the valves V1 and V6 are just about to be opened. When this is done the reactor is once again filled up with a new batch of soil water 15 as shown in figure 2a and a process cycle is ended.

Figure 3 shows the structure of the reactor tank 4 more closely. Also in this figure the reactor tank is supposed to be integral with the sludge separator, and separated therefrom by the partition wall 2. The hose or tube connector 8 leads to the reactor 4 for filling same with soil water in the first phase (stage 1). The same interconnection means 8 is used for returning excess sludge 14 from the reactor 4 to the slidge separator (stage 5). The valve V1 which in this preferred embodiment is mounted at the bottom of the hose 8 can be formed as a hose valve arranged for being operated by means of compressed air as known in the art.

Figure 3 also shows the standpipe 9, the overflow outlet 10, the outlet 11 with the air evacuation tube 12 and the closing lid 13 of the standpipe 9 and a valve V6 formed for being closed when the reactor 4 is put under pressure by means of some type of compressor or blowing apparatus 19. In the reactor there is also shown the membrane aerating means 16 which is supplied with compressed air over the valve V4. There is also a container 20 for deposition and flocculation chemicals and at the bottom thereof a dosing means comprising two dosing tubes. The dosings are operated by the valves V2 and V3. The reactor is put under pressure by means of the blower apparatus over the valve V5.

For operating the process it is necessary to use a level indicator, for instance of the dipping type as shown in figure 3 and having indicator rods for three levels N1, N2 and N3. The level indicator is mounted in a sealed tube 21, preferably of PVC plastic which is at the bottom formed with a pressure equalizing rubber seed 22. The tube 21 and the rubber seed 22 contains clear water which gets the same surface level as the soil water 15 in the reactor. The control signals of the level indicator preferably are fed to a control unit, a so called PLC, standing for Programmable Logic Controller of a known type. Even the most simple embodiment of such PLC unit has a sufficient number of inputs, outputs and calculation functions for making it possible to control all various types of processes which may be of interest within the SBR technology. The OLC unit is allowed to directly control a set of electrically operated air valves LV1, LV2, LV3 and LV6 which, in turn, operate the large valves V1, V2, V3 and V6. The valves V4 and V5 preferably are operated directly from the PLC unit.

In a preferred simple embodiment for separate domestic use, not illustrated in the drawings, the functions of the level indicators and the PLC may be substituted by timers.

Figure 3 finally shows a sample tube 23 extending through the lid 6 and the sealing lid 13 down to a level in the standpipe 9 making it possible to take samples of the clear water 17 when said water is pressed up in the standpipe 9. The sampling can be made manually, or it may be automized. The apparatus preferably also should be formed with a pressure gauge indicating the pressure in the reactor and also in supply conduits to the membrane aerating apparatus 16 and the hose valve V1. The pressure gauge also can be connected to the PLC unit for giving alarm in case of appearing false pressures.

For the operation of the reactor it is sufficient that the blower machine 19 creates a pressure of only about 0.1 to 0.2 bar. This pressure, which corresponds to 1-2 meter water column, is sufficient for tapping water to and from the reactor. A specielly useful blower machine for this purpose is a so called side channel fan which can issue a pressure of about 0.3 bar. This pressure is sufficient for aerating of the reactor tank having a water depth of about 2.5 meter from the bottom thereof and by using a rubber membrane aerating device having an opening pressure of about 0.05 bar. The pressure is also sufficient for effectively close the hose valve V1 at a dipping depth of up to about 1.5 meter.

In a preferred embodiment of the invention such blower apparatus provides the pressure in the reactor 4 when clear water 17 is to be drained, when excess sludge 14 is to be returned from the reactor 4 to the sludge separator or to another vessel, when the soil water 15 is to be aerated, when the hose valve V1 between the sludge separator and the reactor 4 is to be closed, and when chemicals 20 are to be admixed to the soil water 15 in the reactor 4.

Figures 5 and 6 show an example of a dosing apparatus for the chemicals which form the depositing and flocculation substances for the soil water. The dosing means is adapted to be placed on the bottom of a vessel containing said chemicals.The dosing apparatus should have an inner volume corresponding to sufficient amount of chemicals for treating a batch of soil water in the reactor. The apparatus comprises a closed tube 24 containing a rubber seed 25 extending slightly outside of the mouth of the tube 24. At the mouth of the tube 24 there is also an intake opening 26 for supply of compressed air in the rubber seed 25 and for introducing chemicals in the tube chamber 24 when the rubber seed 25 is not filled with air. There is also a passage 27 for an outlet hose 28 for supply of chemicals to the soil water of the reactor. When the rubber seed 25 is filled with air said rubber seed 25 first closes the intake opening 26 for chemicals and then forces said chemicals out to the reactor 4 through the hose 28. On said hose 28 can be mounted a closing means 29 for preventing chemicals from freely flowing out in the reactor. The amount of chemicals dosed to the soil water can be controlled by introducing the rubber seed 25 differently far into the end closed tube 24.

In the plant according to the described embodiment there are two dosing valve tubes V2 and V3 (figure 3), one valve tube arranged to be emptied if only the level N2 has been reached and the other valve tube to additionally be emptied if the level N3 has been reached. The valves V2 and V3 are arranged to control such dosings. Not all types of soil water need to be chemically purified, and if not necessary the dosing of chemicals is excluded in the process.

A normal operation cycle using the present invention can be as follows (se figure 3):
1. The valve V1 is open since the preceding operation cycle. The valve V6 is opened and soil water from the sludge separator flows into the reactor until the level N2 has been reached therein.
2. The aerating is started by opening of the valve V4. The aeration generally is prosecuted for about 2.5 hours. The hose valve V1 can be closed directly when the aeration is commenced or on any later occasion, however generally not later than 15-30 minutes for the aeration is stopped.
3. When the valve V1 is closed the dosing valve V2 is activated, and if the level N3 has been reached in the reactor also the valve V3 is activated, and chemicals are supplied to the water in the reactor.
4. The aeration is interrupted by closing of the valve V4, and concurrently therewith also the valve V6 is closed. Thereby the sedimentation phase is started, which phase is pursued for about 45 minutes.
5. The draining of clear water is made in that compressed air is introduced in the reactor in that the valve V5 is opened, whereby a dynamic over pressure is built up. Clear water is drained until the level N1 has been reached, or alternatively for a predetermined period of time, whereupon the valve V5 is reclosed.
6. The hose valve V1 is opened and the remaining over pressure, in this connection referred to as statical over pressure, makes active sludge, so called excess of sludge, become transmitted to the sludge separator.

The operation safety of a plant according to the invention is very high, and this is necessary for small plants for which it is not economically possible to continuously supervise the plant. Mechanically the plant most possibly will operate for many years without being supervised. For the sake of safety and to avoid unexpected breakdowns, however, the rubber of the hose valves ought to be exchanged once a year. It also may be preferred to maintenance supervise the reactor and thereby to remove coatings therein a few times a year, and in this connection also to remove sludge from the sludge separator.

The purification plant according to the invention is well suited for treating of municipal soil water in an area from a couple of domestic places up to about a hundred houses. It is also useful for purification of industrial waste water which needs to be biologically and chemically purified. A special field of application relates to activities at which various amounts of soil are created during different days or weeks, for instance in tourist camps. In such places several reactors can be connected parallelly to each other and can be taken into and out of operation as the soil water load increases or decreases respectively. The BOX reduction and the phosphorus reduction can be calculated to about 90%.

Figure 7 shows how the above described plant can be formed in two units, namely a sludge separator 3' which is connected to one or more reactors 4' over tubes 8'.

Figure 8 shows a preferred embodiment of a standpipe 9 having a magazine for water when the static pressure is to press excess sludge out of the reactor upon a signal from a timer. As indicated in figure 8 it is also possible to, alternatively or supplimentary to the widened magazine tube of figure 8, arrange one or more additional standpipes without overflow outlets and with direct connection to the main standpipe 9.

### Reference numerals

- 1: tank
- 2: partition wall
- 3: sludge separator / balancing tank
- 4: reactor
- 5: lid (of 3)
- 6: lid (of 4)
- 7: inlet
- 8: outlet, hose, tube
- 9: standpipe
- 10: overflow outlet
- 11: outlet
- 12: air evacuation tube
- 13: sealing top
- 14: active, sludge (of 4)
- 15: soil water (of 4)
- 16: aerating means
- 17: clear water
- 18: water (of 3)
- 19: blower apparatus
- 20: vessel
- 21: sealed tube
- 22: rubber seed
- 23: sampling tube
- 24: closed tube
- 25: rubber seed
- 26: intake opening
- 27: passage
- 28: outlet hose
- 29: closing means

## Claims

1. Method for batchwise purification, by biological and, upon need, chemical, treatment of soil or waste water in a reactor tank (4) having a tight lid (6) and arranged for making it possible to create an over pressure in the reactor tank (4), **characterized** in that ready treated water in the reactor tank (4) is pressed up through a standpipe (9) and to an outlet (11) of the reactor tank (4) and is drained by means of an over pressure provided by a blower machine (19), and in that excess sludge is thereafter forced out of the reactor tank (4) using a static over pressure, which is the pressure remained in the reactor tank (4) after said blower machine has been switched off, or provided by a blower machine.

2. Method according to claim 1, **characterized** in that the excess sludge (14) is forced out of the reactor tank (4) and into a sludge separator tank (3).

3. Method according to claim 1 or 2, **characterized** in that the soil or waste water (18) first enters a sludge separator or a balancing tank (3), in which some of the sludge existing in the water sediments, and after a predetermined water level has been reached in the reactor tank (4) a valve means (V1) of a hose (8) is opened and the soil or waste water flows into the reactor tank (4), and in that a portion of the sludge (14) formed in the reactor tank (4) is pressed back to the sludge separator (3) through the same hose (8) and valve means (V1) through which the water is transmitted to the reactor tank (4).

4. Method according to claim 3, **characterized** in that the hose (8) extends between the sludge separator / the balancing tank (3) and the reactor tank (4), and in that the valve means (V1) thereof, which is a hose valve (V1), is opened when water is introduced in the reactor tank (4) and when excess sludge (14) is pressed back to the sludge separator (3), but which is being closed by means of compressed air from a blower machine (19) when clean (purified) water (17) is being pressed out of the reactor tank (4).

5. Method according to any of claims 1-4, **characterized** in that the entire purification plant is controlled fully automized by a PLC unit (Programmable Logic Controller) assisted by level indicators (N1-N3) in the reactor tank (4) and several control valves (V1-V6).

6. Method according to any of claims 1-4, **characterized** in that the entire purification plant is controlled, fully automized, by means of timers.

7. Apparatus for batchwise purification of soil water or waste water according to any of claims 1-6 by biological, and upon need chemical purification of the soil or waste water, comprising at least one sludge separator tank (3), or alternatively a balancing tank, and a reactor tank (4) having a tight lid (6) and means (V1, 19) for making it possible to create an over pressure in the reactor tank (4), **characterized** in that the reactor tank (4) comprises a standpipe (9) for draining of ready treated water through an outlet (11) thereof, and having a blower machine (19), for instance a side channel fan, for creating a dynamic over pressure in the reactor tank (4) used for pressing said ready treated water out of the reactor tank (4) through said standpipe (9) .

8. Apparatus according to claim 7, **characterized** in that a connection tube or hose (8) comprising a hose valve (V1) is mounted between the sludge separator / balancing tank (3) and the reactor tank (4), and in that said hose valve (V1) is arranged for being closed by means of compressed air from a blower machine.

9. Apparatus according to claim 7 or 8, **characterized** in that the connection tube or hose (8) is arranged both for transferring soil or waste water from the sludge separator / balancing tank (3) to the reactor tank (4) and for transmitting excess sludge back from the reactor tank (4) to the sludge separator tank (3), which latter transferring is made by means of a static over pressure provided in the reactor tank (4) by the blower machine (19).

10. Apparatus according to any of claims 7, 8 or 9, **characterized** in that the apparatus comprises a dosing container (24) for chemicals and having a rubber seed (25) arranged for dosing said chemicals into the reactor tank (4) by means of compressed air from the blower machine applied to said rubber seed (25).

11. Apparatus according to claim 10, **characterized** in that the rubber seed (25) is arranged to close a connection (26) to the dosing container (24) at the same time as the rubber seed (25) is subjected to the compressed air.

## Patentansprüche

1. Verfahren zur schubweisen Reinigung durch biologische und, bei Bedarf, chemische Behandlung von Schmutz- oder Abwasser in einem Reaktortank (4) mit einem dichten Deckel (6), der derart ausgebildet ist, daß er es ermöglicht, einen Überdruck im Reaktortank (4) zu erzeugen,
**dadurch gekennzeichnet,**
daß fertig behandeltes Wasser im Reaktortank (4) durch ein Steigrohr (9) zu einem Auslaß (11) des Reaktortanks (4) hochgedrückt wird und mittels eines durch eine Kompressormaschine (19) erzeugten Überdrucks abgeführt wird, und
daß überschüssiger Schlamm anschließend mit Hilfe eines statischen Überdrucks aus dem Reaktortank (4) herausgedrückt wird, wobei der statische Überdruck derjenige Druck ist, der nach dem Abschalten der Kompressormaschine im Reaktortank (4) verbleibt oder der durch eine Kompressormaschine erzeugt wird.

2. Verfahren nach Anspruch 1, dadurch gekennzeichnet, daß der überschüssige Schlamm (14) aus dem Reaktortank (4) in einen Schlammabscheidetank (3) gedrückt wird.

3. Verfahren nach Anspruch 1 oder 2, dadurch gekennzeichnet, daß das Schmutz- oder Abwasser (18) zunächst in einen Schlammabscheide- oder Ausgleichtank (3) eintritt, in welchem ein Teil des im Wasser vorhandenen Schlamms sich absetzt, und, nachdem ein vorgegebener Wasserpegel im Reaktortank (4) erreicht wurde, eine Ventileinrichtung (V1) eines Schlauchs (8) geöffnet wird und das Schmutz- oder Abwasser in den Reaktortank (4) fließt, und daß ein Teil des Schlamms (14), der sich im Reaktor (4) gebildet hat, durch den gleichen Schlauch (8) und die gleiche Ventileinrichtung (V1), durch welche das Wasser in den Reaktortank (4) geleitet wurde, in den Schlammabscheider (3) zurückgedrückt wird.

4. Verfahren nach Anspruch 3, dadurch gekennzeichnet, daß sich der Schlauch (8) zwischen dem Schlammabscheide-/Ausgleichtank (3) und dem Reaktortank (4) erstreckt und daß dessen Ventileinrichtung (V1), die ein Schlauchventil (V1) ist, geöffnet wird, wenn Wasser in den Reaktortank (4) eingeführt wird und wenn Überschußschlamm (14) in den Schlammabscheider (3) zurückgepreßt wird, welche aber mittels Druckluft von einer Kompressormaschine (19) geschlossen wird, wenn sauberes (gereinigtes) Wasser (17) aus dem Reaktortank (4) herausgedrückt wird.

5. Verfahren nach einem der Ansprüche 1 bis 4, dadurch gekennzeichnet, daß die gesamte Kläranlage vollautomatisch durch eine PLC-Einheit (programmierbare Logiksteuerung) gesteuert wird, die durch Pegelindikatoren (N1-N3) im Reaktortank (4) und durch verschiedene Steuerventile (V1-V6) unterstützt wird.

6. Verfahren nach einem der Ansprüche 1 bis 4, dadurch gekennzeichnet, daß die gesamte Kläranlage vollautomatisch mittels einer Zeitgabeschaltung gesteuert wird.

7. Vorrichtung zum schubweisen Reinigen von Abwasser oder Schmutzwasser nach einem der Ansprüche 1 bis 6 mittels biologischer und, nach Bedarf, chemischer Reinigung des Schmutz- oder Abwassers, mit Wenigstens einem Schlammabscheidetank (3), oder alternativ einem Ausgleichtank, und einem Reaktortank (4) mit einem dichten Deckel (6) und Mitteln (V1, 19), die es ermöglichen, einen Überdruck im Reaktortank (4) zu erzeugen, dadurch gekennzeichnet, daß der Reaktortank (4) ein Steigrohr (9) zum Abführen von fertig behandeltem Wasser durch einen zugehörigen Auslaß (11) und eine Kompressormaschine (19), beispielsweise ein Seitenkanal-Gebläse, zum Erzeugen eines dynamischen Überdrucks im Reaktortank (4) aufweist, wobei der dynamische Überdruck dazu verwendet wird, das fertig behandelte Wasser aus dem Reaktortank (4) durch das Steigrohr (9) zu drücken.

8. Vorrichtung nach Anspruch 7, dadurch gekennzeichnet, daß ein Verbindungsrohr oder Schlauch (8) mit einem Schlauchventil (V1) zwischen dem Schlammabscheide-/Ausgleichtank (3) und dem Reaktortank (4) montiert ist, und daß das Schlauchventil (V1) so ausgebildet ist, daß es mit Hilfe von Druckluft aus einer Kompressormaschine geschlossen werden kann.

9. Vorrichtung nach Ansprüchen 7 und 8, dadurch gekennzeichnet, daß das Verbindungsrohr bzw. der Schlauch (8) sowohl für ein Leiten des Schmutz- oder Abwassers aus dem Schlammabscheide-/Ausgleichtank (3) in den Reaktortank (4) als auch zum Zurückleiten überschüssigen Schlamms vom Reaktortank (4) in den Schlammabscheidetank (3) ausgebildet ist, wobei das Zurückleiten mit Hilfe einen statischen Überdrucks ausgeführt wird, der im Reaktortank (4) durch eine Kompressormaschine (19) erzeugt wird.

10. Vorrichtung nach einem der Ansprüche 7 bis 9, dadurch gekennzeichnet, daß die Vorrichtung einen Dosierungsbehälter (24) für Chemikalien aufweist, der eine Gummiblase (25) zum dosierten Abgeben der Chemikalien in den Reaktortank (4) mit Hilfe von auf die Gummiblase (25) einwirkender Druckluft von einer Kompressormaschine hat.

11. Vorrichtung nach Anspruch 10, dadurch gekennzeichnet, daß die Gummiblase (25) so ausgebildet ist, daß sie eine Verbindung (26) zu dem Dosierungsbehälter (24) in dem Moment abschließt, in dem die Gummiblase (25) mit Druckluft beaufschlagt wird.

## Revendications

1. Procédé de purification biologique et, au besoin, chimique par lots d'eau du sol ou d'eaux usées dans un réservoir (4) de réacteur comportant un couvercle étanche (6) et agencé de manière à rendre possible la création d'une surpression dans le réservoir (4) de réacteur, caractérisé en ce qu'une eau traitée préte contenue dans le réacteur est élevée par compression à travers un tuyau vertical (9) et vers une sortie (11) du réservoir (4) de réacteur et est drainée au moyen d'une surpression exercée par une machine soufflante (19), et en ce que de la boue en excès est ensuite expulsée à force hors du réservoir (4) de réacteur en utilisant une surpression statique, qui est la pression subsistant dans le réservoir (4) de réacteur lorsque ladite machine soufflante a été mise à l'arrêt, ou qui est exercée par une machine soufflante.

2. Procédé selon la revendication 1, caractérisé en ce qu'une boue en excès (14) est expulsée à force hors du réservoir (4) de réacteur et envoyée dans un réservoir séparateur (3) de boue.

3. Procédé selon la revendication 1 ou 2, caractérisé en ce que de l'eau de sol ou les eaux suées (18) entrent en premier lieu dans un séparateur de boue ou un réservoir d'équilibrage (3), dans lequel une fraction de la boue existant dans l'eau est soumise à une sédimentation, et un moyen de vanne (V1) d'un tuyau (8) est ouvert lorsqu'un niveau d'eau prédéterminé a été atteint dans le réservoir (4) de réacteur et l'eau de sol ou les eaux usées s'écoulent dès lors vers le réservoir (4) de réacteur, et en ce qu'une partie de la boue (14) formée dans le réservoir (4) de réacteur est renvoyée par compression dans la séparateur (3) de boue à travers le même tuyau (8) et le même moyen de vanne (V1) que ceux à travers lesquels l'eau est transmise au réservoir (4) de réacteur.

4. Procédé selon la revendication 3, caractérisé en ce que le tuyau (8) s'étend entre le séparateur de boue / le réservoir d'équilibrage (3) et le réservoir (4) de réacteur, et en ce que son moyen de vanne (V1), qui est une vanne (V1) à tuyau, est ouvert lorsque de l'eau est introduite dans le réservoir (4) de réacteur et lorsque de la boue en excès (14) est renvoyée par compression vers le séparateur (3) de boue, mais est fermé au moyen d'air comprimé venant d'une machine soufflante (19) lorsque de l'eau propre (purifiée) (17) est envoyée par compression hors du réservoir (4) de réacteur.

5. Procédé selon l'une quelconque des revendications 1 à 4, caractérisé en ce que l'installation de purification toute entière est commandée de façon complètement automatisée par une unité de commande à logique programmable (PLC) assistée par des indicateurs de niveau (N1 à N3) situés dans le réservoir (4) de réacteur et par plusieurs vannes de commande (V1 à V6).

6. Procédé selon l'une quelconque des revendications 1 à 4, caractérisé en ce que l'installation de purification toute entière est commandée, de manière complètement automatisée, au moyen de minuteries.

7. Appareil de purification d'eau du sol ou d'eaux usées par lots selon l'une quelconque des revendications 1 à 4 par purification biologique et, au besoin, chimique de l'eau du sol ou des eaux usées, comprenant au moins un réservoir séparateur (3) de boue, ou en variante un réservoir d'équilibrage, et un réservoir (4) de réacteur comportant un couvercle étanche (6) et un moyen (V1, 19) agencé de manière à rendre possible la création d'une surpression dans le réservoir (4) de réacteur, caractérisé en ce que le réservoir (4) de réacteur comprend un tuyau vertical (9) pour drainer de l'eau traitée prête hors de ce réacteur vers une sortie (11) de celui-ci, et comportant une machine soufflante (19), par exemple un ventilateur de canal latéral, pour créer dans le réservoir (4) de réacteur une surpression dynamique utilisée pour expulser du réservoir (4) de réacteur par compression cette eau traitée prête à travers ledit tuyau vertical (9).

8. Appareil selon la revendication 7, caractérisé en ce qu'un tube ou tuyau de connexion (8) comprenant une vanne (V1) à tuyau est monté entre le séparateur de boue / réservoir d'équilibrage (3) et le réservoir (4) de réacteur; et en ce que ladite vanne (V1) à tuyau est agencée de manière à être fermée au moyen d'air comprimé venant d'une machine soufflante.

9. Appareil selon la revendication 7 ou 8, caractérisé en ce que le tube ou tuyau (8) de connexion est agencé de manière tant à transférer de l'eau du sol ou des eaux usées à partir du séparateur de boue / réservoir d'équilibrage (3) vers le réservoir (4) de réacteur qu'à renvoyer de la boue en excès à partir du réservoir (4) de réacteur vers le séparateur (3) de boue, ce dernier transfert étant effectué au moyen d'une surpression statique exercée dans le réservoir (4) de réacteur par la machine soufflante (19).

10. Appareil selon l'une quelconque des revendications 7, 8 ou 9, caractérisé en ce que l'appareil comprend une récipient doseur (24) destiné aux produits chimiques et pourvu d'une capsule en caoutchouc (25) agencée pour introduire de façon dosée ledits produits chimiques dans le réservoir (4) de réacteur au moyen d'air comprimé provenant de la machine soufflante appliqué à ladite capsule de caoutchouc (25).

11. Appareil selon la revendication 10, caractérisé en ce que la capsule en caoutchouc (25) est agencée de manière à fermer une connexion (26) vers le récipient doseur (24) en même temps que la capsule de caoutchouc (25) est soumise à l'air comprimé.
